# EUROPÄISCHE PATENTANMELDUNG

(11) **EP 1 150 028 A1**
(43) Veröffentlichungstag der Anmeldung: **31.10.2001**
(21) Anmeldenummer: 01110236.5
(22) Anmeldetag: 25.04.2001
(51) Int. Cl.: F16D 23/06

(54) **Schiebemuffe für ein Schaltgetriebe und Verfahren zu deren Herstellung**

(30) Priorität: 28.04.2000 DE 10021088
(71) Anmelder: Johann Hay GmbH & Co. KG, Automobiltechnik, 55566 Bad Sobernheim (DE)
(72) Erfinder:
(74) Vertreter: Grünecker, Kinkeldey, Stockmair & Schwanhäusser Anwaltssozietät

(57) **Zusammenfassung**

Die vorliegende Erfindung betrifft eine Schiebemuffe und ein Verfahren zur Herstellung einer Schiebemuffe für ein Schaltgetriebe. Die Schiebemuffe weist in vorbekannter Weise einen sich zur äußeren Umfangsfläche öffnenden Schaltgabeleinstich und eine an ihrer inneren Umfangsfläche ausgebildete Verzahnung aus. Die erfindungsgemäße Schiebemuffe, welche ohne Beeinträchtigung der Verschleißfestigkeit kostengünstiger herstellbar ist, zeichnet sich erfindungsgemäß durch eine Oberflächenhärte des Schaltgabeleinstiches aus, welche durch Kaltwalzen eingestellt ist, wobei die Verzahnung lokal gehärtet, insbesondere induktiv gehärtet ist. Bei dem erfindungsgemäßen Verfahren zur Herstellung der Schiebemuffe wird der Schaltgabeleinstich durch Kaltwalzen fertig bearbeitet.

## Beschreibung

Die vorliegende Erfindung betrifft eine Schiebemuffe für ein Schaltgetriebe, welche einen sich zur äußeren Umfangsfläche öffnenden Schaltgabeleinstich und eine an ihrer inneren Umfangsfläche ausgebildete Verzahnung aufweist.

Derartige Schiebemuffen finden in manuellen Schaltgetrieben Verwendung. Dann weist die Schiebemuffe mindestens eine an der Stirnseite der Schiebemuffe ausgebildete, regelmäßig gehärtete Druckfläche auf, die mit einem Synchronring zur Reib-Synchronisierung der Drehzahl zusammenwirkt. Werden Schiebemuffen in elektrisch schaltenden Getrieben eingesetzt, bei denen die Synchronisierung elektronisch erfolgt, so kann auf die Ausbildung einer derartigen Druckfläche an der Stirnseite der Schiebemuffe verzichtet werden.

Schiebemuffen werden üblicherweise aus einem mittels Umformen, vorzugsweise Schmieden erzeugten Rohling hergestellt, welcher vollständig überdreht wird, um die Endkontur der fertigen Schiebemuffe herzustellen. Auf der inneren Umfangsfläche der Schiebemuffe wird dann eine Verzahnung üblicher Weise geräumt oder gestoßen. Hinterschneidungen dieser Verzahnung werden zumeist durch walzen hergestellt gewalzt. Danach folgt das Fräsen von Details. Das derart hergestellte Bauteil wird dann einsatzgehärtet.

Bei einem derartigen Herstellungsverfahren ergibt sich eine durch das Einsatzhärten bzw. Nitrieren bestimmte Oberflächenhärte auf dem gesamten Bauteil.

Das Einsatzhärten der Schiebemuffe bringt zum einen den Nachteil mit sich, dass das in seiner Endkontur fertiggestellte Bauteil einen relativ zeitaufwendigen Härteprozess durchlaufen muss. Darüber hinaus kann beim Einsatzhärten ein Verzug an dem Bauteil auftreten, so dass die Maßhaltigkeit der Schiebemuffe beeinträchtigt wird. Nicht zuletzt aufgrund des apparativen und zeitlichen Aufwandes ist das Einsatzhärten verhältnismäßig teuer.

Der vorliegenden Erfindung liegt die Aufgabe zugrunde, eine Schiebemuffe anzugeben, welche ohne Beeinträchtigung der Verschleißfestigkeit des Bauteiles kostengünstiger herstellbar ist. Der Erfindung liegt weiterhin die Aufgabe zugrunde ein Verfahren zur kostengünstigen Herstellung einer Schiebemuffe anzugeben.

Zur Lösung dieser Aufgabe wird mit der vorliegenden Erfindung die Schiebemuffe der eingangs genannten Art dadurch weitergebildet, dass die Oberflächenhärte des Schaltgabeleinstiches durch Kaltverfestigung eingestellt ist und dass die Verzahnung lokal gehärtet, insbesondere induktiv gehärtet ist.

Die erfindungsgemäße Schiebemuffe wird nicht mehr insgesamt in einem Härteprozess gehärtet, sondern lediglich lokal, und zwar im Bereich der Verzahnung. Der Schaltgabeleinstich, welcher im Stand der Technik zunächst überdreht und dann beim Einsatzhärten gehärtet worden ist, um ihn gegenüber Verschleiß durch den in dem Schaltgabeleinstich angeordneten Gleitstein zu schützen, weist eine durch Kaltverfestigung, vorzugsweise durch Kaltwalzen eingestellte Oberflächenhärte auf. Der Schaltgabeleinstich wird demnach bereits beim Kaltwalzen des Rohlings auf seine Endkontur gebracht und gleichzeitig gehärtet. Es hat sich heraus- gestellt, dass bei entsprechender Werkstoffwahl für die Schiebemuffe die Verfestigung der Oberflächen durch Kaltwalzen im Bereich des Schaltgabeleinstiches zur Einstellung einer hinreichenden Verschleißfestigkeit der Schiebemuffe gegenüber einem in den Schaltgabeleinstich eingreifenden Gleitstein ausreichend ist. Die Oberfläche des Schaltgabeleinstichs wird bei der erfindungsgemäßen Schiebemuffe nicht zusätzlich durch Einsatzhärten oder Nitrieren gehärtet. In der Reibpaarung Schaltgabeleinstich/Gleitstein wird der Gleitstein üblicherweise als weicheres Bauteil, d.h. als Verschleißteil der Reibpaarung ausgelegt.

Bei der erfindungsgemäßen Schiebemuffe wird die Verzahnung lediglich lokal gehärtet, vorzugsweise induktiv. Zur Anwendung kommt vorzugsweise ein Induktivhärten in Frequenzbereichen, die auf den jeweiligen Anwendungsfall abzustimmen sind. Dabei ist auch ein Induktivhärten unter Verwendung unterschiedlicher Frequenzen möglich (Multifrequenzhärten) Die Einstellung geeigneter Parameter für das Induktivhärten stehen im Belieben des Fachmannes und sind abhängig von dem jeweiligen Werkstoff und der Verzahnungsgeometrie einzustellen. Beim Härten der Verzahnung soll insbesondere die Oberfläche der Zähne verfestigt werden. Durch entsprechende Abstimmung der Verfahrensparameter ist es darüber hinaus möglich, die gewünschte Festigkeit im Zahnfuß der einzelnen Zähne einzustellen. Das lokale Härten der Verzahnung bietet die Möglichkeit, lediglich die Härte der Oberfläche der Zähne zu steigern und den Kernbereich der Zähne in gewünschter Weise einzustellen. Ein lokales Härten lässt sich gegenüber dem Einsatzhärten genauer steuern. Darüber hinaus ist es weniger zeitaufwendig. Ein Verzug des Bauteiles ist durch die lokale Wärmeeinwirkung nicht so stark ausgeprägt, wie das beispielsweise beim Einsatzhärten der Fall ist.

Eine bevorzugte Weiterbildung der erfindungsgemäßen Schiebemuffe ist in Anspruch 2 angegeben.

Zur Lösung der Aufgabe hinsichtlich des Verfahrens wird das vorbekannte Verfahren dadurch weitergebildet, dass ein sich zur äußeren Umfangsfläche der Schiebemuffe öffnender Schaltgabeleinstich durch Kaltwalzen fertig bearbeitet wird.

Während bei dem vorbekannten Verfahren der durch Kaltwalzen gehärtete Oberflächenbereich des Schaltgabeleinstiches zunächst spanhebend bearbeitet wurde und dann in seiner durch spanhebende Bearbeitung eingestellten Endkontur gehärtet wurde, erfolgt bei dem erfindungsgemäßen Herstellungsverfahren die Fertigbearbeitung des Schaltgabeleinstiches durch Kaltwalzen. Weitere Verfahrensschritte sind zumindest an der äußeren Umfangsfläche nicht mehr erforderlich. Die an der inneren Umfangsfläche regelmäßig ausgebildete Verzahnung kann durch Einschrumpfen eines Zahnringes ausgebildet werden. Auch kann eine Verzahnung an dem kaltgewalzten Bauteil unmittelbar spanhebend ausgebildet und nachfolgend lokal gehärtet werden.

Bei der Herstellung einer Schiebemuffe für ein manuelles Schaltgetriebe wird vorzugsweise die an der Stirnseite der Schiebemuffe ausgebildete Druckfläche beim lokalen Härten der Verzahnung ausgebildet. Dabei ist die Druckfläche vorzugsweise unmittelbar anschließend an die Verzahnung ausgebildet, so dass bereits das lokale Härten der Verzahnung an der inneren Umfangsfläche der Schiebemuffe auch zu einer Steigerung der Härte in einem Teilbereich der Ringflächen der Schiebemuffe führt.

## Patentansprüche

1. Schiebemuffe für ein Schaltgetriebe, welche einen sich zur äußeren Umfangfläche öffnenden Schaltgabeleinstich und eine an ihrer inneren Umfangsfläche ausgebildete Verzahnung aufweist,
**dadurch gekennzeichnet,**
**dass** die Oberflächenhärte des Schaltgabeleinstiches durch Kaltverfestigung eingestellt ist und
**dass** die Verzahnung lokal gehärtet, insbesondere induktiv gehärtet ist.

2. Schiebemuffe nach Anspruch 1, **dadurch gekennzeichnet, dass** eine an der Stirnseite der Schiebemuffe ausgebildete Druckfläche unmittelbar benachbart zu der Verzahnung ausgebildet ist.

3. Verfahren zur Herstellung einer Schiebemuffe für ein Schaltgetriebe, bei dem ein Rohling kaltgewalzt wird, und nachfolgend eine Verzahnung an der inneren Umfangsfläche der Schiebemuffe ausgebildet wird,
**dadurch gekennzeichnet,**
**dass** ein sich zur äußeren Umfangsfläche der Schiebemuffe öffnender Schaltgabeleinstich durch Kaltwalzen fertig hergestellt und bezüglich der Oberflächenhärte eingestellt wird.

4. Verfahren nach Anspruch 3, **dadurch gekennzeichnet, dass** die Verzahnung lokal gehärtet wird.

5. Verfahren nach Anspruch 4, **dadurch gekennzeichnet, dass** die Verzahnung induktiv, vorzugsweise mittels Multifrequenzhärten gehärtet wird.

6. Verfahren nach einem der Ansprüche 3-5, **dadurch gekennzeichnet, dass** eine stirnseitige Druckfläche zusammen mit der Verzahnung lokal gehärtet wird.
